# EUROPÄISCHE PATENTSCHRIFT

(11) **EP 2 024 653 B1**
(45) Veröffentlichungstag und Bekanntmachung des Hinweises auf die Patenterteilung: **28.07.2010**
(21) Anmeldenummer: 07722491.3
(22) Anmeldetag: 31.05.2007
(51) Int. Cl.: F16C 33/60, F16C 19/38, F16C 33/76, F16J 15/06

(54) **WÄLZLAGER MIT ZWEI INNENRINGEN UND EINER DICHTUNGSANORDNUNG ZUR ABDICHTUNG DER TRENNFUGE ZWISCHEN DEN INNENRINGEN**
ROLLING BEARING HAVING TWO INNER RINGS AND A SEAL ARRANGEMENT FOR SEALING THE PARTING JOINT BETWEEN THE INNER RINGS
PALIER À ROULEMENT AVEC DEUX BAGUES INTERNES ET UN AGENCEMENT D'ÉTANCHÉITÉ POUR L'ÉTANCHÉITÉ DU JOINT DE SÉPARATION ENTRE LES BAGUES INTERNES

(30) Priorität: 07.06.2006 DE 102006026443
(43) Veröffentlichungstag der Anmeldung: 18.02.2009
(73) Patentinhaber: Schaeffler Technologies GmbH & Co. KG, 91074 Herzogenaurach (DE)
(72) Erfinder: HENNEBERGER, Wolfram, 96117 Memmelsdorf (DE)
(86) Internationale Anmeldenummer: PCT/DE2007/000977
(87) Internationale Veröffentlichungsnummer: WO 2007/140750

(56) Entgegenhaltungen:
- EP-A- 0 645 573
- JP-A- 11 321 211
- US-A- 3 669 474
- US-A- 6 039 319

## Beschreibung

### Gebiet der Erfindung

Die Erfindung betrifft ein Wälzlager, mit zumindest einem Außenring und einem mehrteiligen Innenring, zwischen denen Wälzkörper angeordnet sind, wobei zwei benachbarte Innenringe mit ihren zueinander weisenden axialen Stirnseiten eng aneinander liegen, und bei dem ein Dichtring in einer gemeinsamen Ringnut der Innenringe angeordnet ist, welche durch Einsenkungen im Bereich der zueinander weisenden Stirnseiten der Innenringe gebildet ist.

### Hintergrund der Erfindung

Ein derartiges Wälzlager ist beispielsweise aus der DE 199 35 014 A1 bekannt. Dieses Wälzlager ist als vierreihiges Kegelrollenlager ausgebildet, bei dem die Wälzkörper zwischen mehreren Innenringen und Außenringen des Lagers angeordnet sind. Das Kegelrollenlager weist axial und radial wirkende Dichtmittel auf, wobei das radial wirkende Dichtmittel einen Spalt zwischen zwei mit ihren Stirnseiten aneinander liegenden Innenringen abdichtet.

Der Dichtring ist in mehreren Ausführungsbeispielen stets an der radialen Innenseite der beiden Innenringe in einer gemeinsamen Ringnut angeordnet, welche durch Einsenkungen im Bereich der zueinander weisenden Stirnseiten der beiden Innenringe ausgebildet ist. Die durch diese Einsenkungen gebildete gemeinsame Ringnut zur Aufnahme des Dichtrings hat dabei jeweils eine rechteckige Querschnittsgeometrie.

Zur Erzielung von gewünschten Dichteigenschaften, welche auch einen Druckausgleich zwischen dem Innenraum des Lager und der Umgebung zulassen sollen bzw. eine Belüftung desselben ermöglicht, umfasst der in Varianten unterschiedlich ausgebildete Dichtring jeweils ein metallisches Spannelement, welches eine radiale Anpresskraft auf den Dichtring in Richtung zu den die Ringnut bildenden Innenringen ausübt und diesen in der Ringnut sichert sowie einen Druckausgleich gestattet. Insofern handelt es sich bei den bekannten Dichtringen durchweg um vergleichsweise teuere Gummi-Metall-Bauteile, die aufgrund ihres dortigen Aufbaus eine hermetische Abdichtung des Innenraumes des Wälzlagers nicht ermöglichen.

Aus der WO 97/42425 A1 ist außerdem ein zweireihiges Kegelrollenlager bekannt, welches als Radlager in einer Radnabe eines Fahrzeuges eingebaut ist. Der zweiteilige Innenring dieses Kegelrollenlagers ist gegen ein Eindringen von unerwünschten Stoffen, wie beispielsweise von Öl aus dem Bereich einer Fahrzeugachse, mittels eines Dichtsystems geschützt, welches die aneinander liegenden Stirnseiten der beiden Innenringe überdeckt und im Lagerinnenraum angeordnet ist. Dieses Dichtsystem besteht aus zwei O-Ringen, von denen jeweils ein O-Ring in einer zugeordneten Ringnut am Außenumfang der jeweiligen Innenringe ausgebildet ist. Die beiden O-Ringe sind zudem von einem metallischen Ring radial umgriffen, welcher dieselben dichtend gegen die zugeordneten Innenringe drückt.

Einen damit vergleichbaren Aufbau zeigt ein vierreihiges Wälzlager, welches aus der DE 39 15 624 A1 bekannt ist, jedoch werden dort keine O-Ringe sondern anders gestaltete Dichtmittel verwendet, welche in eine im Querschnitt rechtwinklige gemeinsame Ringnut an den Innenringen eingesetzt und durch einen Blechring gehalten sind.

Schließlich ist aus der DE 36 21 381 A1 ein zweireihiges Wälzlager bekannt, welches mehrteilige Innenringe und Außenringe aufweist. Bei diesem Wälzlager sind die Außenringe mittels eines Distanzringes axial zueinander beabstandet, während die Innenringe mittels eines im Querschnitt U-förmigen Befestigungsringes verbunden sind, deren Schenkel in jeweils zugeordnete Umfangsnuten in den Innenringen eingreifen.

Die bisher bekannten Wälzlager mit zwei stirnseitig eng aneinander liegenden Innenringen weisen nur eine ungenügende Abdichtung des Aufnahmeraumes für dessen Wälzkörper auf, so dass ungewollt Schmierstoff aus dem Wälzlager austreten kann oder Fremdstoffe eintreten können. In beiden Fällen ist mit einer Verschlechterung der Eigenschaften und einer Verkürzung der Lagerlebensdauer des Wälzlagers zu rechnen. Bemängelt wird bei einigen Ausführungsformen beispielsweise eine unzureichende axiale Verspannung der beiden Innenringe gegeneinander, so dass im Bereich derer Trennfuge zwischen deren Stirnseiten Fremdstoffe die dort angeordnete Dichtung überwinden können. Sofern bei anderen Ausführungsformen die Dichtung mittels eines gesonderten Blechringes oder durch einen in deren Gummimaterial eingearbeiteten Blechring mit einer für Dichtzwecke ausreichenden Wirkung gegen die Innenringe pressbar ist, so werden diese Dichtringe als vergleichsweise teuer in der Herstellung beurteilt.

### Aufgabe der Erfindung

Vor diesem Hintergrund liegt der Erfindung die Aufgabe zugrunde, ein gattungsgemäßes Wälzlager zu schaffen, dessen Innenraum insbesondere im Bereich der stirnseitigen Trennfuge zwischen zwei seiner Lagerringe hermetisch gegen das Eindringen von Fremdstoffen und/oder das Abfließen von Schmiermittel abgedichtet ist. Das Wälzlager soll dabei hinsichtlich der Dichtungsanordnung technisch einfach und zur Realisierung günstiger Herstellkosten möglichst wenig Einzelteile aufweisen.

### Zusammenfassung der Erfindung

Der Erfindung liegt die Erkenntnis zugrunde, dass die gestellte Aufgabe lösbar ist durch ein Wälzlager mit einer geometrisch speziell ausgebildeten gemeinsamen Aufnahmenut, welche im Bereich der aneinander liegenden Stirnseiten der Innenringe des Wälzlagers ausgebildet ist und in welche - wegen der speziellen Geometrie der Aufnahmenut - ein Dichtring selbstsichernd und selbstabdichtend aufgenommen werden kann.

Gemäß der Erfindung wird die gestellte Aufgabe gelöst durch ein Wälzlager mit zumindest einem Außenring und einem mehrteiligen Innenring, zwischen denen Wälzkörper angeordnet sind, wobei zwei benachbarte Innenringe mit ihren zueinander weisenden axialen Stirnseiten eng aneinander liegen, und bei dem ein Dichtring in einer gemeinsamen Ringnut der Innenringe angeordnet ist, welche durch Einsenkungen im Bereich der zueinander weisenden Stirnseiten der Innenringe ausgebildet ist.

Gemäß der Erfindung ist zudem vorgesehen, dass die gemeinsame Ringnut im Querschnitt gesehen im Bereich ihres Bodens eine größere axiale Länge aufweist als eine im radial äußeren Bereich der Ringnut vorgesehene, radiale Öffnung des Ringnut.

Demnach ist gemäß der Erfindung im Wesentlichen allein durch einen einfach und materialsparend herzustellenden Dichtring - aufgenommen in der gemeinsamen Ringnut - eine hermetisch abdichtende und selbstsichernde Dichtungsanordnung am Wälzlager geschaffen, die sicher und mit wenig Aufwand ein Eindringen von Fremdstoffen und/oder ein Abwandern von Schmierstoff über die aneinander liegenden Stirnseiten der Innenringe in oder aus denjenigen Raum des Wälzlagers verhindert, in dem die Wälzkörper angeordnet sind.

In entsprechender Umkehrung bei gleichen vorteilhaften Wirkungen und Effekten kann die Erfindung auch an einem geteilten Außenring realisiert sein.

Besonders bevorzugt kann weiter vorgesehen sein, dass zumindest in einer der Einsenkungen, insbesondere in beiden Einsenkungen, ein Hinterschnitt ausgebildet ist. In diesen Hinterschnitt bzw. Hinterschnitten kann sich beim Einbau des Dichtrings dieser dichtend einformen.

Ein weiteres Merkmal des Wälzlagers ist in diesem Zusammenhang, dass die die eingeengte radiale Öffnung der gemeinsamen Ringnut durch radial außen liegende und axial ausgerichtete Ringstege an den Einsenkungen der Innenringe gebildet ist.

Ein weiteres vorteilhaftes Merkmal eines Wälzlagers gemäß der Erfindung ist, dass die Einsenkungen im Bereich der Stirnseiten der jeweiligen Innenringe, die ja die gemeinsame Ringnut zur Aufnahme des Dichtrings bilden, jeweils unterschiedlich ausgebildet sind, d.h. eine unterschiedliche axiale und/oder radiale Länge oder Tiefe aufweisen. Durch diesen Aufbau, insbesonde im Fall unterschiedlicher axialer Längen, wird das Aufschieben des Dichtringes auf die beiden Innenringe bzw. in die gemeinsame Ringnut erleichtert, worauf im Zusammenhang mit einem konkreten Ausführungsbeispiel weiter unten ausführlicher eingegangen wird.

Unterstützend wirkt weiterhin die Querschnittsgeometrie des Dichtrings, welche im Besonderen wie vorgeschlagen mit der Geometrie der Ringnut zusammenwirken kann.

Insbesondere kann hier besonders bevorzugt sein, dass zumindest im Bereich der Einsenkungen der Innenringe der Dichtring im Kontakt mit den Innenringen steht - insbesondere ist hier eine Kontaktfläche im Bereich des Hinterschnitts bzw. der Hinterschnitte vorgesehen - und zumindest eine axiale Stirnfläche des Dichtrings zumindest im Bereich des Kontakts, insbesondere der Hinterschnitte, vor einem Einsetzen des Dichtrings in die gemeinsame Ringnut eine ebene, radial nach außen verlaufende Fläche aufweist.

Weiterhin kann hier vorgesehen sein, dass beide axialen Stirnflächen des Dichtrings jeweils zumindest im Bereich des Kontakts vor einem Einsetzen des Dichtrings in die gemeinsame Ringnut eine ebene, radial nach außen verlaufende Fläche aufweisen.

Ein weiteres Merkmal hierbei kann sein, dass die ebene, radial nach außen verlaufende Fläche an der Stirnseite des Dichtrings zumindest ein Stück weit weiter radial nach außen verläuft als der Hinterschnitt bzw. der hinterschnittene Ringsteg am entsprechenden Innenring.

Hinsichtlich der Werkstoffauswahl für den Dichtring wird bevorzugt, dass der Dichtring aus einem gummielastischen Material besteht. Damit kann ein besonders gutes Einschmiegen des Dichtrings in die Hinterschnitte erreicht werden.

Diese vorgeschlagene Geometrie des Dichtringes - in Zusammenwirken mit der erfindungsgemäßen Geometrie der gemeinsamen Ringnut - führt einerseits zu sehr guten Dichteigenschaften sowie anderseits zu einer Selbstsicherung desselben in der Ringnut, so dass abweichend von bekannten gattungsgemäßen Wälzlagern keine zusätzlichen, den Dichtring radial umgreifenden Blechringe oder Dichtringe mit integriertem Metallring genutzt werden müssen.

Um die beiden Innenringe gegeneinander axial zu sichern, kann an der vom Lagerinnenraum wegweisenden Seite der Innenringe ein klammerartiger Blechring befestigbar, welcher in Ringnuten der aneinander liegenden Innenringe radial eingreift.

In einer baulich konkreten Ausführungsform eines Wälzlagers gemäß der Erfindung kann vorgesehen sein, dass der Dichtring einen radial inneren Abschnitt mit einem rechten, geraden Ringsteg und einem linken, geraden Ringsteg sowie einen radial äußeren Abschnitt mit einem rechten Ringsteg und einem linken Ringsteg aufweist, und dass zwischen diesen Ringstegen jeweils eine rechte Einschnürung, ähnlich einer Nut, beziehungsweise eine linke Einschnürung, ähnlich einer Nut, ausgebildet ist, wobei die radial inneren Ringstege zum größten Teil axial in die stirnseitigen Einsenkungen der benachbarten Innenringe eingesetzt sind. Ein darüber hinausragender Teil gerader radial innerer Ringstege kann darüber hinaus vorgesehen sein.

Nach einer Ausführungsform eines gemäß der Erfindung aufgebauten Wälzlagers kann vorgesehen sein, dass dieses als ein mehrreihiges Kegelrollenlager mit schräg gestellten Wälzkörpern in O-Anordnung oder X-Anordnung ausgebildet ist, mit zumindest einem Außenring - vorgesehen können hier auch zwei Außenringe sein - und zwei Innenringen, bei denen die Innenringe mittels einer ringförmige Klammer axial zueinander gehalten sind. Die ringförmige Klammer weist bevorzugt einen U-förmigen Querschnitt auf und ist mit jeweils einem ihrer Schenkel in je eine Umfangsnut an der wälzkörperfernen Seite sowie der dichtringfernen Seite der jeweiligen Innenringe eingesetzt ist.

Hinsichtlich der Werkstoffauswahl für die Klammer wird bevorzugt, dass die Klammer aus einem metallischen Werkstoff besteht.

Eine andere Ausbildung eines gattungsgemäßen Wälzlagers mit zwei stirnseitig eng aneinander liegenden Außenringen und einer dort angeordnet bzw. ausgebildeten Dichtung gemäß der Erfindung ist demnach ebenso technisch möglich. Die Klammer ist dann radial außen an den beiden Außenringen befestigt, um diese axial gegeneinander zu sichern.

Schließlich sei darauf hingewiesen, dass das Wälzlager gemäß der Erfindung auch über an sich bekannte Dichtmittel verfügt, welche den Aufnahmeraum für die Wälzkörper axial abdichten.

Die Erfindung wird im Folgenden anhand der beiliegenden Zeichnung an einem Ausführungsbeispiel näher erläutert. Darin zeigt
- Fig. 1: einen schematischen Querschnitt durch ein zweireihiges Kegelrol- lenlager,
- Fig. 2: eine Ringnut im Kegelrollenlager gemäß dem Detail Z der Fig. 1 zur Aufnahme eines Dichtrings, und
- Fig. 3: einen Querschnitt durch den Dichtring.

### Detaillierte Beschreibung der Zeichnungen

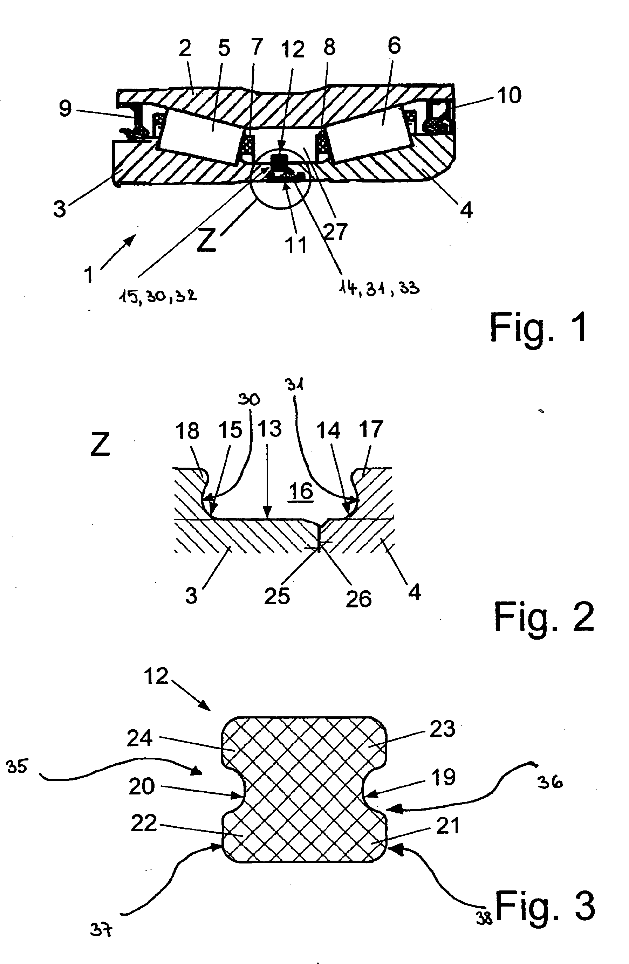

Das in Fig. 1 dargestellte Wälzlager 1 ist demnach als zweireihiges Kegelrollenlager ausgebildet, es könnte sich aber ebenso gut um ein andersartiges Wälzlager handeln, welches zumindest einen Außenring 2 und wenigstens zwei stirnseitig eng aneinander liegende Innenringe 3, 4 aufweist.

In dem durch diese Lagerringe 2, 3, 4 gebildeten Aufnahmeraum 27, welcher axial durch an sich bekannte Dichtmittel 9, 10 in Gummi- und Blechbauweise gegen ein Eindringen von Fremdstoffen und einen Schmiermittelaustritt abgedichtet ist, sind als Kegelrollen ausgebildet Wälzkörper 5, 6 angeordnet, wobei die Wälzkörper 5, 6 einer jeden Reihe in einem gesonderten Käfig 7 bzw. 8 gehalten sind.

Die beiden Innenringe 3, 4 weisen im Bereich ihrer zueinander zeigenden Stirnseiten 25 bzw. 26 an der radialen Innenseite, also fern von den Laufbahnen für die Wälzkörper 5 und 7, jeweils eine Radialnut auf, in welche die Schenkel eines U-förmigen Blechringes als ringförmige Klammer 11 eingesetzt sind. Diese Klammer 11 verbindet die beiden Innenringe 3 und 4 im Wesentlichen axial miteinander, so dass sich diese auch unter der Wirkung der axialen Kraftkomponente der kegeligen Wälzkörper 5, 6 nicht voneinander weg bewegen können.

Wie insbesondere die Ausschnittsvergrößerung des Bereiches Z der Fig. 1 in Fig. 2 verdeutlicht, ist radial oberhalb der Klammer 11 an der gegenüberliegenden radialen Außenseite der beiden Innenringe 3 und 4, also innerhalb des Aufnahmeraumes 27 zur Aufnahme der Wälzkörper 5 und 6, im Bereich der zueinender weisenden Stirnseiten 25, 26 der Innenringe 3, 4 jeweils eine Einsenkung 14 bzw. 15 ausgebildet, die in Axialrichtung unterschiedlich lang sind und eine gemeinsame Ringnut 16 zur Aufnahme des in Fig. 3 dargestellten Dichtringes 12 bilden.

Wie Fig. 2 deutlich zeigt, weist die gemeinsame Ringnut 16 im Bereich ihres radial inneren Bodens 13 eine größere axiale Länge auf als im radial äußeren Bereich ihrer daher eingeengten Öffnung. Die genannte Engstelle der gemeinsamen Ringnut 16 wird gebildet durch jeweils einen axialen hinterschnittenen Ringsteg 17 bzw. 18 am radial nach außen verlaufenden Ende der Einsenkungen 14 bzw. 15.

Fig.3 verdeutlicht eine Ausgestaltung des Dichtrings 12.

Wie Fig.3 zeigt weist dieser Dichtring 12 - im Querschnitt - eine im wesentlichen rechteckförmige Gestalt auf, welche eine beiderseitige axiale Einschnürung 19, 20 aufweist. Dadurch bilden sich beim Dichtring 12 ein radial innerer Abschnitt mit einem rechten, geraden Ringsteg 21 und einem linken, geraden Ringsteg 22 sowie ein radial äußeren Abschnitt mit einem rechten Ringsteg 23 und einem linken Ringsteg 24 aus.

Mit seinen radial inneren axialen und geraden Ringstegen 21 und 22 kann der Dichtring 12 sehr gut abdichtend und verliersicher in die Einsenkungen 14, 15 der Innenringe 3 ,4 bzw. in die Hinterschnitten 30, 31 der hinterschnittenen Ringstegen 17, 18 der Innenringe 3, 4 eingesetzt werden, wobei sich - in ihren radial unteren Bereichen - die entsprechenden, geraden Kontaktflächen des Dichtrings 12 in die jeweiligen Hinterschnitte 30, 31 abdichtend und selbstsichernd einschmiegen. Im übrigen ragen die ebenen, radial nach auβen verlaufenden Flächen 21, 22 an den Stirnseiten des Dichtrings 12 zumindest ein Stück weit weiter radial nach außen als die Hinterschnitte 30, 31.

Da das Einsetzen des Dichtringes 12 bevorzugt erfolgt, bevor die beiden Innenringe 3 und 4 mittels der Klammer 11 miteinander verbunden sind, bietet der axial längere Bodenabschnitt des Innenrings 3 dem Dichtring 12 nach einem axialen Aufschieben auf den Innenring 3 für weitere Montageschritte des Wälzlagers 1 dort einen sicheren Halt.

Sobald dann der zweite Innenring 4 mit seiner Stirnseite 25 an die Stirnseite 26 des Innenrings 3 angelegt und durch Einsetzen der Klammer 11 axial gesichert ist, befindet sich der Dichtring 12 verliersicher in der gemeinsamen Ringnut 16, da sich in ihren unteren Bereichen die radial inneren axialen und geraden Ringstege 21 und 22 des Dichtrings 12 - mit ihren geraden Stirnwänden in die ausgebildeten Hinterschnitte 30, 31 der Innenringe 3, 4 bzw. der Ringestege 17, 18 der Innenringe 3, 4 einschmiegen.

Der beschriebene Aufbau des Wälzlagers 1, insbesondere im Hinblick auf deren Dichtungsanordnung, verhindert sicher und mit vergleichsweise geringem technischen Aufwand bei gleichzeitiger Materialeinsparung, dass durch den Spalt zwischen den aneinander liegenden Stirnseiten 25, 26 der beiden Innenringe 3, 4 keine Fremdstoffe in den Aufnahmeraum 27 für die Wälzkörper 5, 6 eindringen bzw. Schmiermittel aus diesem entweichen kann.

In einem konkreten Nutzungsfall, bei dem das Wälzlager 1 als Radlager an einer Hinterachse eines Nutzfahrzeuges verwendet wird, kann so sicher das Eindringen von Öl vom Hinterachsgetriebe in den Aufnahmeraum 27 für die Wälzkörper verhindert werden.

### Bezugszeichenliste

- 1: Wälzlager
- 2: Außenring
- 3: Erster Innenring
- 4: Zweiter Innenring
- 5: Wälzkörper
- 6: Wälzkörper
- 7: Käfig
- 8: Käfig
- 9: Axiales Dichtmittel
- 10: Axiales Dichtmittel
- 11: Ringförmige Klammer

- 12: Dichtring

- 13: Boden der Ringnut 16
- 14: Einsenkung im Innenring 4
- 15: Einsenkung im Innenring 3
- 16: Gemeinsame Ringnut

- 17: hinterschnittener Ringsteg am Innenring 4
- 18: hinterwchnittener Ringsteg am Innenring 3

- 19: Rechte Einschnürung am Dichtmittel bzw. am Dichtring 12
- 20: Linke Einschnürung am Dichtmittel bzw. am Dichtring 12
- 21: Rechter, gerader Ringssteg am Dichtring 12, radial innen
- 22: Linker, gerader Ringssteg am Dichtring 12, radial innen
- 23: Rechter Ringssteg am Dichtring, radial außen
- 24: Linker Ringssteg am Dichtring, radial außen

- 25: Stirnseite des Innenringes 4
- 26: Stirnseite des Innenringes 3
- 27: Aufnahmeraum für die Wälzkörper

- 30: Hinterschnitt am Innenring 3 bzw. am hinterschnittenen Ringsteg 18
- 31: Hinterschnitt am Innenring 4 bzw. am hinterschnittenen Ringsteg 17

- 32: Kontakt bzw. Kontaktfläche Innenring 3 zu Dichtring 12
- 33: Kontakt bzw. Kontaktfläche Innenring 4 zu Dichtring 12

- 35: erste axiale Stirnseite des Dichtrings 12
- 36: zweite axiale Stirnseite des Dichtrings 12
- 37: ebene, radial nach außen verlaufende Fläche an der Stirnseite 35
- 38: ebene, radial nach außen verlaufende Fläche an der Stirnseite 36

## Patentansprüche

1. Wälzlager (1), mit zumindest einem Außenring (2) und einem mehrteiligen Innenring (3, 4), zwischen denen Wälzkörper (5, 6) angeordnet sind, wobei zwei benachbarte Innenringe (3, 4) mit ihren zueinander weisenden axialen Stirnseiten (25, 26) aneinander liegen, und bei dem ein Dichtring (12) in einer gemeinsamen Ringnut (16) der Innenringe (3, 4) angeordnet ist, welche durch Einsenkungen (14, 15) im Bereich der zueinander weisenden Stirnseiten (25, 26) der Innenringe (3, 4) gebildet ist, **dadurch gekennzeichnet, dass** die gemeinsame Ringnut (16) im Querschnitt gesehen im Bereich ihres Bodens (13) eine größere axiale Länge aufweist als eine im radial äußeren Bereich der Ringnut (16) vorgesehene, radiale Öffnung der Ringnut (16).

2. Wälzlager (1) nach Anspruch 1, **dadurch gekennzeichnet, dass** zumindest in einer der Einsenkungen (14, 15), insbesondere in beiden Einsenkungen (14, 15), ein Hinterschnitt (30, 31) ausgebildet ist.

3. Wälzlager nach mindestens einem der voranstehenden Ansprüche, **dadurch gekennzeichnet, dass** die eingeengte radiale Öffnung der gemeinsamen Ringnut (16) durch radial außen liegende und axial ausgerichtete Ringstege (17, 18) an den Einsenkungen (14, 15) der Innenringe (3, 4) gebildet ist.

4. Wälzlager (1) nach zumindest einem der voranstehenden Ansprüche, **dadurch gekennzeichnet, dass** zumindest im Bereich der Einsenkungen (14, 15) der Dichtring (12) im Kontakt (32, 33) mit den Innenringen (3, 4) steht und zumindest eine axiale Stirnfläche (35, 36) des Dichtrings (12) zumindest im Bereich des Kontakts vor einem Einsetzen des Dichtrings (12) in die gemeinsame Ringnut (16) eine ebene, radial nach außen verlaufende Fläche (37, 38) aufweist.

5. Wälzlager (1) nach Anspruch 4, **dadurch gekennzeichnet, dass** die ebene, radial nach außen verlaufende Fläche an der Stirnseite des Dichtrings weiter radial nach außen verläuft als der hinterschnittene Ringsteg am entsprechenden Innnenring (3,4).

6. Wälzlager (1) nach zumindest einem der voranstehenden Ansprüche, **dadurch gekennzeichnet, dass** beide axiale Stirnflächen (35, 36) des Dichtrings (12) jeweils zumindest im Bereich des Kontakts vor einem Einsetzen des Dichtrings (12) in die gemeinsame Ringnut (16) eine ebene, radial nach außen verlaufende Fläche aufweisen.

7. Wälzlager nach zumindest einem der voranstehenden Ansprüche, **dadurch gekennzeichnet, dass** der Dichtring (12) einen radial inneren Abschnitt mit einem rechten Ringsteg (21) und einem linken Ringsteg (22) sowie einen radial äußeren Abschnitt mit einem rechten Ringsteg (23) und einem linken Ringsteg (24) aufweist, und dass zwischen den Ringstegen (21, 22; 23, 24) jeweils eine rechte sowie eine linke Einschnürung (19, 20) ausgebildet ist, wobei die radial inneren Ringstege (21, 22) zum größten Teil axial in den stirnseitigen Einsenkungen (14, 15) der benachbarten Innenringe (3, 4) eingesetzt sind

8. Wälzlager nach mindestens einem der voranstehenden Ansprüche, **dadurch gekennzeichnet, dass** der Dichtring (12) aus einem gummielastischen Material besteht.

9. Wälzlager nach mindestens einem der voranstehen Ansprüche, **dadurch gekennzeichnet, dass** das Wälzlager (1) als ein mehrreihiges Kegelrollenlager mit schräg gestellten Wälzkörpern (5, 6) in O-Anordnung oder X-Anordnung ausgebildet ist, mit zumindest einem Außenring (2) und zwei Innenringe (3, 4), bei denen die Innenringe (3, 4) mittels einer ringförmige Klammer (11) axial zueinander gehalten sind, oder umgekehrt.

10. Wälzlager nach dem voranstehenden Anspruch, **dadurch gekennzeichnet, dass** die ringförmige, insbesondere aus metallischem Werkstoff bestehende, Klammer (11) einen U-förmigen Querschnitt aufweist und mit jeweils einem ihrer Schenkel in je eine Umfangsnut an der wälzkörperfernen sowie der dichtringfernen Seite der jeweiligen Innenringe (3, 4) eingesetzt ist.

11. Wälzlager nach mindestens einem der voranstehenden Ansprüchen, **dadurch gekennzeichnet, dass** die Einsenkungen an den Stirnseiten (25, 26) der jeweiligen Innenringe (3, 4) eine unterschiedliche axiale und/oder radiale Länge oder Tiefe aufweisen.

12. Wälzlager nach mindestens einem der voranstehenden Ansprüche,
**dadurch gekennzeichnet, dass** das Wälzlager (1) Dichtmittel (9, 10) aufweist, welche den Aufnahmeraum (27) für die Wälzkörper (5, 7) axial abdichten.

## Claims

1. Rolling bearing (1) having at least one outer ring (2) and a multipart inner ring (3, 4) between which rolling bodies (5, 6) are arranged, wherein two adjacent inner rings (3, 4) bear against each other with their axial end sides (25, 26) which point toward each other, and in which a ring seal (12) is arranged in a common annular groove (16) of the inner rings (3, 4), which annular groove is formed by indentations (14, 15) in the region of the end sides (25, 26), which point toward each other, of the inner rings (3, 4), **characterized in that** the common annular groove (16) has, viewed in cross section, a greater axial length in the region of its base (13) than an opening of the annular groove (16) provided in the radially outer region of the annular groove (16).

2. Rolling bearing (1) according to Claim 1, **characterized in that** an undercut (30, 31) is formed at least in one of the indentations (14, 15), in particular in both indentations (14, 15).

3. Rolling bearing according to at least one of the preceding claims, **characterized in that** the constricted radial opening of the common annular groove (16) is formed by radially external and axially oriented annular webs (17, 18) on the indentations (14, 15) of the inner rings (3, 4).

4. Rolling bearing (1) according to at least one of the preceding claims, **characterized in that** at least in the region of the indentations (14, 15) the ring seal (12) is in contact (32, 33) with the inner rings (3, 4) and at least one axial end face (35, 36) of the ring seal (12) has, at least in the region of contact prior to insertion of the ring seal (12) into the common annular groove (16), a flat, radially outwardly extending surface (37, 38).

5. Rolling bearing (1) according to Claim 4, **characterized in that** the flat, radially outwardly extending surface on the end side of the ring seal extends further radially outwards than the undercut annular web on the corresponding inner ring (3, 4).

6. Rolling bearing (1) according to at least one of the preceding claims, **characterized in that** both axial end faces (35, 36) of the ring seal (12) each have, at least in the region of contact prior to insertion of the ring seal (12) into the common annular groove (16), a flat, radially outwardly extending surface.

7. Rolling bearing according to at least one of the preceding claims, **characterized in that** the ring seal (12) has a radially inner portion comprising a right annular web (21) and a left annular web (22) and also a radially outer portion comprising a right annular web (23) and a left annular web (24), and **in that** a respective right and also a left constriction (19, 20) are formed between the annular webs (21, 22; 23, 24), the radially inner annular webs (21, 22) being for the most part inserted axially into the end-side indentations (14, 15) of the adjacent inner rings (3, 4).

8. Rolling bearing according to at least one of the preceding claims, **characterized in that** the ring seal (12) is made of a rubbery resilient material.

9. Rolling bearing according to at least one of the preceding claims, **characterized in that** the rolling bearing (1) is embodied as a multiple-row tapered roller bearing with obliquely positioned rolling bodies (5, 6) in an O-shaped arrangement or X-shaped arrangement, having at least one outer ring (2) and two inner rings (3, 4), in which the inner rings (3, 4) are held axially to each other by means of an annular clasp (11), or vice versa.

10. Rolling bearing according to at least the preceding claim, **characterized in that** the annular clasp (11), which is in particular made of metallic material, has a U-shaped cross section and is inserted with in each case one of its arms into a respective circumferential groove on the side, which is remote from the rolling bodies and also remote from the ring seal, of the respective inner rings (3, 4).

11. Rolling bearing according to at least one of the preceding claims, **characterized in that** the indentations on the end sides (25, 26) of the respective inner rings (3, 4) have a different axial and/or radial length or depth.

12. Rolling bearing according to at least one of the preceding claims, **characterized in that** the rolling bearing (1) has sealing means (9, 10) which axially seal the receiving space (27) for the rolling bodies (5, 7).

## Revendications

1. Palier à roulement (1) avec au moins une bague extérieure (2) et une bague intérieure en plusieurs parties (3, 4), entre lesquelles des corps de roulement (5, 6) sont disposés, dans lequel deux bagues intérieures voisines (3, 4) sont appliquées l'une contre l'autre par leurs faces frontales axiales (25, 26) tournées l'une vers l'autre, et dans lequel une bague d'étanchéité (12) est disposée dans une rainure annulaire commune (16) des bagues intérieures (3, 4), qui est formée par des saignées (14, 15) dans la région des faces frontales (25, 26) tournées l'une vers l'autre des bagues intérieures (3, 4), **caractérisé en ce que** la rainure annulaire commune (16), vue en section transversale, présente une plus grande longueur axiale dans la région de son fond (13) qu'une ouverture radiale de la rainure annulaire (16) prévue dans la région radialement extérieure de la rainure annulaire (16).

2. Palier à roulement (1) selon la revendication 1, **caractérisé en ce qu'**une contre-dépouille (30, 31) est réalisée au moins dans une des saignées (14, 15), en particulier dans les deux saignées (14, 15).

3. Palier à roulement selon au moins une des revendications précédentes, **caractérisé en ce que** l'ouverture radiale rétrécie de la rainure annulaire commune (16) est formée par des nervures annulaires (17, 18) orientées axialement et situées radialement à l'extérieur sur les saignées (14, 15) des bagues intérieures (3, 4).

4. Palier à roulement (1) selon au moins une des revendications précédentes, **caractérisé en ce que** la bague d'étanchéité (12) est en contact (32, 33) avec les bagues intérieures (3, 4) au moins dans la région des saignées (14, 15) et au moins une face frontale axiale (35, 36) de la bague d'étanchéité (12) présente, au moins dans la région du contact, une face plane (37, 38), s'étendant radialement vers l'extérieur, avant une insertion de la bague d'étanchéité (12) dans la rainure annulaire commune (16).

5. Palier à roulement (1) selon la revendication 4, **caractérisé en ce que** la face plane, s'étendant radialement vers l'extérieur, sur la face frontale de la bague d'étanchéité, s'étend plus loin radialement vers l'extérieur que la nervure annulaire en contre-dépouille sur la bague intérieure correspondante (3, 4).

6. Palier à roulement (1) selon au moins une des revendications précédentes, **caractérisé en ce que** les deux faces frontales axiales (35, 36) de la bague d'étanchéité (12) présentent respectivement, au moins dans la région du contact, une face plane s'étendant radialement vers l'extérieur, avant une insertion de la bague d'étanchéité (12) dans la rainure commune (16).

7. Palier à roulement selon au moins une des revendications précédentes, **caractérisé en ce que** la bague d'étanchéité (12) présente une partie radialement intérieure avec une nervure annulaire droite (21) et une nervure annulaire gauche (22) ainsi qu'une partie radialement extérieure avec une nervure annulaire droite (23) et une nervure annulaire gauche (24), et **en ce qu'**un étranglement droit ainsi qu'un étranglement gauche (19, 20) est respectivement formé entre les nervures annulaires (21, 22; 23, 24), dans lequel les nervures annulaires radialement intérieures (21, 22) sont pour la plus grande partie insérées axialement dans les saignées frontales (14, 15) des bagues intérieures voisines (3, 4).

8. Palier à roulement selon au moins une des revendications précédentes, **caractérisé en ce que** la bague d'étanchéité (12) se compose d'un matériau élastique du type caoutchouc.

9. Palier à roulement selon au moins une des revendications précédentes, **caractérisé en ce que** le palier à roulement (1) se présente sous la forme d'un roulement à billes à plusieurs rangées avec des corps de roulement (5, 6) disposés en oblique en agencement O ou en agencement X, avec au moins une bague extérieure (2) et deux bagues intérieures (3, 4), dans lesquelles les bagues intérieures (3, 4) sont maintenues axialement l'une par rapport à l'autre au moyen d'une attache annulaire (11), ou inversement.

10. Palier à roulement selon la revendication précédente, **caractérisé en ce que** l'attache annulaire (11), constituée en particulier d'un matériau métallique, présente une section transversale en forme de U et est introduite chaque fois par une de ses branches respectivement dans une rainure périphérique sur le côté éloigné des corps de roulement ainsi que sur le côté éloigné de la bague d'étanchéité des bagues intérieures respectives (3, 4).

11. Palier à roulement selon au moins une des revendications précédentes, **caractérisé en ce que** les saignées présentent une longueur ou une profondeur axiale et/ou radiale différente sur les côtés frontaux (25, 26) des bagues intérieures respectives (3, 4).

12. Palier à roulement selon au moins une des revendications précédentes, **caractérisé en ce que** le palier à roulement (1) présente des moyens d'étanchéité (9, 10), qui assurent l'étanchéité axiale de l'espace de réception (27) pour les corps de roulement (5,6).
